(19) Europäisches Patentamt
European Patent Office
Office européen des brevets

(11) **EP 4 189 344 B1**

(12) **FASCICULE DE BREVET EUROPEEN**

(45) Date de publication et mention de la délivrance du brevet:
**03.09.2025 Bulletin 2025/36**

(21) Numéro de dépôt: **20793022.3**

(22) Date de dépôt: **30.07.2020**

(51) Classification Internationale des Brevets (IPC):
**G01J 9/00** *(2006.01)*    **G02B 26/06** *(2006.01)*

(52) Classification Coopérative des Brevets (CPC):
**G02B 3/0056; G01J 9/00; G02B 3/0087; G02B 27/0068;** G02B 2003/0093

(86) Numéro de dépôt international:
**PCT/FR2020/051404**

(87) Numéro de publication internationale:
**WO 2022/023619 (03.02.2022 Gazette 2022/05)**

(54) **SYSTÈME DE CONTRÔLE DE SURFACES D'ONDE OPTIQUE PAR FILTRE À GRADIENT DE DENSITÉ**

SYSTEM ZUR INSPEKTION VON OBERFLÄCHEN EINER OPTISCHEN WELLE UNTER VERWENDUNG EINES GRADIENTENDICHTEFILTERS

SYSTEM FOR INSPECTING SURFACES OF AN OPTICAL WAVE USING A GRADIENT DENSITY FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**07.06.2023 Bulletin 2023/23**

(73) Titulaires:
- **Centre national de la recherche scientifique**
  **75016 Paris (FR)**
- **Observatoire de la Côte d'Azur**
  **06300 Nice (FR)**
- **Université Côte d'Azur**
  **06103 Nice Cedex 2 (FR)**
- **UNIVERSITÉ GRENOBLE ALPES**
  **38400 Saint-Martin-d'Heres (FR)**

(72) Inventeurs:
- **HENAULT, François**
  **38100 Grenoble (FR)**
- **SPANG, Alain**
  **06140 Vence (FR)**

(74) Mandataire: **IPAZ**
**Bâtiment Platon**
**Parc Les Algorithmes**
**91190 Saint-Aubin (FR)**

(56) Documents cités:
**FR-A1- 2 907 214**

- **HÉNAULT ET AL.: "Crossed-sine wavefront sensor for adaptive optics, metrology and ophthalmology applications", ENGINEERING RESEARCH EXPRESS, vol. 2, 015042, 4 March 2020 (2020-03-04), pages 1 - 14, XP002802658**
- **HÉNAULT AND SPANG: "Crossed-cosine intensity filter for coronagraphy and low-order wavefront sensing", OPTICAL ENGINEERING, vol. 48, no. 7, 073608, 1 July 2009 (2009-07-01), pages 1 - 7, XP002802659**
- **HÉNAULT: "Wavefront sensor baed on varying transmission filters: theory and expected performance", JOURNAL OF MODERN OPTICS, vol. 52, no. 14, 2006, pages 1917 - 1933, XP009526873**

**Description**

Le domaine technique de l'invention est celui de la mesure et du contrôle de surfaces d'onde optiques. Un grand nombre de domaines techniques nécessite le contrôle de surfaces d'onde. On citera plus particulièrement, mais de manière non exhaustive, le contrôle de la qualité de surfaces optiques ou de systèmes optiques, le contrôle d'optiques adaptatives utilisées dans des domaines allant de l'astronomie à l'ophtalmologie.

Le contrôle de la qualité des surfaces optiques est un domaine extrêmement vaste qui inclut la métrologie de composants optiques individuels, l'alignement de systèmes optiques complexes, ou l'évaluation de la qualité de faisceaux laser. Il couvre les domaines spectraux visible, infrarouge ou ultraviolet. Les appareils de mesure utilisés actuellement sont des interféromètres qui réclament le développement de systèmes imposants, ou de senseurs de front d'onde plus compacts mais de moindre précision et de résolution plus faible. On trouvera dans l'ouvrage de D. Malacara intitulé « Optical Shop Testing » Third Edition, Willey 2007 des informations complémentaires sur ce point.

Les grands télescopes utilisés pour l'astronomie comportent des systèmes d'optique adaptative qui nécessitent des senseurs de front d'onde. Ces systèmes ne sont pas nécessairement bien adaptés à l'observation d'objets étendus tels que des galaxies ou des amas globulaires. Par ailleurs, ces systèmes peuvent comporter des étoiles artificielles obtenues à partir de faisceaux laser. Dans ce cas, les systèmes d'optiques adaptatives sont nécessairement complexes dans la mesure où ils comportent autant de senseurs de front d'onde que d'étoiles artificielles. On trouvera d'autres informations sur ce sujet, dans les publications suivantes :

- J.W. Hardy, J.E. Lefebvre, C.L. Kolioupoulos intitulée « Real-time atmospheric compensation » J. Opt. Soc. Am. Vol. 67, p. 360-369 (1977),

- R. V. Shack, B.C. Platt intitulée « Production and use of a lenticular Hartmann screen » J. Opt. Soc. Am. Vol. 61, p. 656 (1971),

- J. Primot, N. Guérineau intitulée « Extended Hartmann test based on the pseudoguiding property of a Hartmann mask completed by a phase chessboard », parue dans Applied Optics vol. 39, P. 5715-5720 (2000).

En ophtalmologie, on utilise également des systèmes d'optique adaptative basés sur l'utilisation de sources laser ponctuelles qui peuvent poser d'autres problèmes d'utilisation. On trouvera dans la publication de J. Lang, B. Grimm, S. Goelz, J. F. Bille, intitulée « Objective measurement of wave aberrations of the humane eye with the use of a Hartmann-Shack wavefront sensor, parue dans J. Opt. Soc. Am. A, vol. 11, p. 1949-2685 (1994) d'autres informations sur ce sujet.

Un système de contrôle des surfaces d'onde optique ne présentant pas les inconvénients précédents est divulgué dans Hénault et Al.: "Crossed-sine wavefront sensor for adaptive optics, metrology and ophthalmology applications", ENGINEERING RESEARCH EXPRESS, vol. 2, 015042, 4 mars 2020, pages 1-14. Il comporte une tête optique qui ne comporte que des éléments optiques simples à réaliser et un traitement d'images. Plus précisément, le dispositif optique comportant une pupille de sortie, ledit système de contrôle comportant une tête de mesure optique et un calculateur de traitements des images issues de ladite tête de mesure optique, dans lequel

- la tête de mesure optique comporte :

  ∘ un filtre à gradient de densité, dans un plan référencé (x', y') perpendiculaire à l'axe optique de la tête de mesure optique, la transmission T(x', y') dudit filtre étant régie par l'équation :

$$T(x', y') = \frac{1 + \sin\left(\sqrt{2}\pi\left(x' - y'\right)/p_x\right)\sin\left(\sqrt{2}\pi\left(x' + y'\right)/p_y\right)}{2} \tag{1}$$

  $p_x$ et $p_y$ représentent les périodes des deux fonctions sinusoïdales dépendant respectivement de (x'-y') et de (x'+y').
  ∘ une trame matricielle de lentilles identiques, de forme carrée, de même focale, ladite trame matricielle comportant au moins quatre lentilles, chaque centre d'une des quatre lentilles étant disposé sur un axe passant par le centre de la pupille de sortie et un point O'M'(i, j) du filtre à gradient de densité tel que, dans le plan référencé (x', y'),

$$O'M'_{i,j} = \begin{bmatrix} i\,(m + 0.25)p_x/\sqrt{2} \\ j\,(n + 0.25)p_y/\sqrt{2} \end{bmatrix}$$

(2)

i et j pouvant prendre les valeurs -1 et +1, m et n étant des entiers positifs ou nuls.

∘ une matrice de photodétecteurs, chacune des quatre lentilles formant de la pupille une image dans le plan de cette matrice, ces images étant référencés $I''_k(x, y)$, k variant de 1 à 4 ;

- le calculateur de traitement des images comporte des moyens de calcul permettant de calculer les dérivées partielles $\frac{\partial \Delta}{\partial x}(x, y)$ et $\frac{\partial \Delta}{\partial y}(x, y)$ de la surface d'onde $\Delta(x, y)$ dans le plan de la pupille de sortie, ces dérivées partielles étant égales à

$$\frac{\partial \Delta}{\partial x}(x, y) = Ax + B\sin^{-1}\left(\frac{I''_4(x,y) - I''_3(x,y) + I''_2(x,y) - I''_1(x,y)}{C}\right)$$

(3)

$$\frac{\partial \Delta}{\partial y}(x, y) = Ay + B\sin^{-1}\left(\frac{I''_4(x,y) + I''_3(x,y) - I''_2(x,y) - I''_1(x,y)}{C}\right)$$

(4)

A, B et C étant des constantes dépendant des paramètres géométriques de la tête de mesure optique.

L'invention porte sur un Système de contrôle d'une surface d'onde optique issue d'un dispositif optique, ledit dispositif optique comportant une pupille de sortie, ledit système de contrôle comportant une tête de mesure optique et un calculateur de traitement des images issues de ladite tête de mesure optique, dans lequel

- - la tête de mesure optique comporte :

∘ un filtre à gradient de densité, dans un plan référencé (x', y') perpendiculaire à l'axe optique de la tête de mesure optique, la transmission T(x', y') dudit filtre étant régie par l'équation :

$$T_{ij}(x', y') = \frac{1 + \sqrt{2}\pi\left(i\,dx'/p_x - j\,dy'/p_x\right)}{2}$$

(5)

avec

$$\begin{bmatrix} dx' \\ dy' \end{bmatrix} = \begin{bmatrix} x' - i\,(m + 0.25)p_x/\sqrt{2} \\ y' - j\,(n + 0.25)p_y/\sqrt{2} \end{bmatrix}$$

(6)

$p_x$ et $p_y$ représentant les périodes associées à deux fonctions sinusoïdales dépendant respectivement de dx' et de dy', i et j pouvant prendre les valeurs -1 et +1, m et n étant des entiers positifs ou nuls,

∘ une trame matricielle de lentilles identiques, de forme carrée, de même focale, ladite trame matricielle comportant au moins quatre lentilles, chaque centre d'une des quatre lentilles étant disposé sur un axe passant par le centre de la pupille de sortie et un point O'M'(i, j) du filtre à gradient de densité tel que, dans le plan référencé (x', y'),

$$O'M'_{i,j} = \begin{bmatrix} i\,(m + 0.25)p_x/\sqrt{2} \\ j\,(n + 0.25)p_y/\sqrt{2} \end{bmatrix}$$

(7)

∘ une matrice de photodétecteurs, chacune des quatre lentilles formant de la pupille une image dans le plan de cette matrice, ces images étant référencées $I''_k(x, y)$, k variant de 1 à 4 ;

- - le calculateur de traitement des images comporte des moyens de calcul permettant de calculer les dérivées partielles $\frac{\partial \Delta}{\partial x}(x, y)$ et $\frac{\partial \Delta}{\partial y}(x, y)$ de la surface d'onde $\Delta(x, y)$ dans le plan $(x, y)$ de la pupille de sortie, ces dérivées partielles étant égales à

$$\frac{\partial \Delta}{\partial x}(x, y) = Ax + B\left(I_4''(x, y) - I_3''(x, y) + I_2''(x, y) - I_1''(x, y)\right) \tag{8}$$

$$\frac{\partial \Delta}{\partial y}(x, y) = Ay + B\left(I_4''(x, y) + I_3''(x, y) - I_2''(x, y) - I_1''(x, y)\right) \tag{9}$$

A et B étant des constantes dépendant des paramètres géométriques de la tête de mesure optique.

L'invention sera mieux comprise et d'autres avantages apparaîtront à la lecture de la description qui va suivre donnée à titre non limitatif et grâce aux figures annexées parmi lesquelles :

La figure 1 représente une vue générale du système de contrôle selon l'invention ;
La figure 2 représente la tête de mesure optique d'un système de contrôle applicable à l'invention ;
La figure 3 représente les maxima et les minima du filtre à gradient de densité à sinus croisés utilisé dans l'article de Hénault et Al ;
La figure 4 représente les courbes de niveaux de la partie centrale du filtre à sinus croisés ;
La figure 5 représente une première répartition des lentilles de la trame matricielle applicable à l'invention ;
La figure 6 représente une seconde répartition des lentilles de la trame matricielle applicable à l'invention ;
La figure 7 représente une troisième répartition des lentilles de la trame matricielle applicable à l'invention ;
La figure 8 représente une quatrième répartition des lentilles de la trame matricielle applicable à l'invention ;
La figure 9 représente une carte en transmission du filtre à sinus croisés ; et
La figure 10 représente une carte en transmission du filtre selon un mode de réalisation de l'invention.

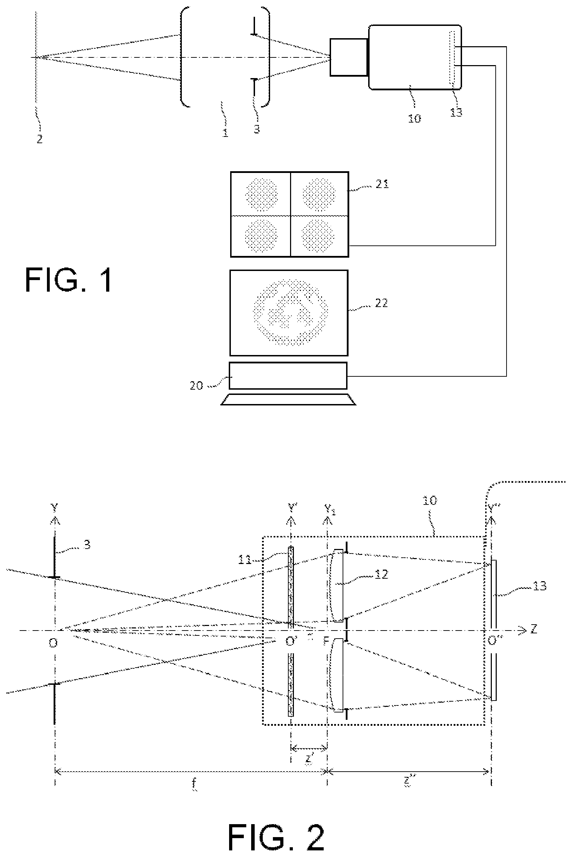

Le synoptique général du système de contrôle des surfaces d'onde optique selon l'invention est représenté sur la figure 1. Il comporte essentiellement une tête optique 10 et un calculateur de traitement d'images 20. La tête optique comporte une matrice de photodétecteurs 13. Celle-ci est reliée à un premier dispositif de visualisation 21 qui affiche les images issues de la matrice de photodétecteurs. De la même façon, le calculateur de traitement d'images comporte un second dispositif de visualisation 22 permettant d'afficher, entre autres, les images traitées et les informations nécessaires au traitement.

Ce système est destiné à contrôler un dispositif optique 1. Celui-ci forme d'un objet lumineux 2 ou d'une source lumineuse une image lumineuse. Lorsque le dispositif optique est un objectif, cette image est réelle. Lorsque le dispositif est un système afocal, l'image est à l'infini. Comme on le verra dans la suite de la description, le système de contrôle selon l'invention est apte à contrôler ces deux types de dispositifs optiques. Dans le cas ce la figure 1, le dispositif optique est un objectif.

Le dispositif optique 1 comporte une pupille 3. L'objet du système de contrôle est de mesurer la surface d'onde de l'image lumineuse donnée par le dispositif optique au niveau de cette pupille. La pupille est généralement de forme circulaire. Elle peut comprendre une obturation centrale et son support éventuel.

La tête optique selon l'invention est représentée en figure 2. Elle comprend essentiellement un filtre 11 à gradient de densité, une trame matricielle de lentilles 12 et la matrice 13 de photodétecteurs comme précédemment indiquée.

Afin de déterminer les positions respectives de ces différents éléments, on a adopté les conventions suivantes.

On note OXYZ le repère attaché à la pupille du dispositif optique. Le point O correspond au centre de la pupille et OZ est l'axe optique du dispositif optique. L'axe X est perpendiculaire au plan de la figure 2. Les points P de la pupille situés dans le plan OXY sont désignés par leurs coordonnées cartésiennes $(x, y)$. Dans ce repère, la surface d'onde à mesurer est notée $\Delta(x, y)$.

On note f la distance qui sépare le plan de la pupille du plan de focalisation du dispositif optique et F le point d'intersection de ce plan de focalisation avec l'axe optique.

On note O'X'Y'Z le repère attaché au plan du filtre à gradient de densité. L'axe X' est perpendiculaire au plan de la figure 2. Le point O' est situé sur l'axe optique à une distance z' égale à FO' du plan de focalisation. Les points M du filtre situés dans le plan O'X'Y' sont désignés par leurs coordonnées cartésiennes $(x', y')$.

On note $FX_1Y_1Z$ le repère attaché au plan de focalisation du dispositif optique. L'axe $X_1$ est perpendiculaire au plan de la figure 2. Les points I situés dans le plan $FX_1Y_1$ sont désignés par leurs coordonnées cartésiennes $(x_1, y_1)$. La

trame matricielle de lentilles se trouve dans ce plan.

On note enfin O"X"Y"Z le repère attaché à la matrice de photodétecteurs. L'axe X" est perpendiculaire au plan de la figure 2. Les images de la pupille formées par les lentilles de la trame matricielle sont situées dans le plan O"X"Y". Le point O" est situé sur l'axe optique à une distance z" du plan $FX_1Y_1$. Les points P" situés dans ce plan O"X"Y" sont désignés par leurs coordonnées cartésiennes (x", y").

Le filtre à gradient de densité est situé dans le plan O'X'Y'. La transmission du filtre utilisé dans l'article de Hénault et AI. T(x', y') est égale au produit de deux fonctions sinusoïdales tournées de 45 degrés autour de l'axe optique. Plus précisément, la transmission du filtre est égale à :

$$T(x',y') = \frac{1 + \sin\left(\sqrt{2}\pi\left(x'-y'\right)/p_x\right)\sin\left(\sqrt{2}\pi\left(x'+y'\right)/p_y\right)}{2} \qquad (10)$$

$p_x$ et $p_y$ représentent les périodes spatiales des deux fonctions sinusoïdales. Ces périodes peuvent être différentes. Dans la suite de la description, on considère que ces périodes sont identiques et égales à p.

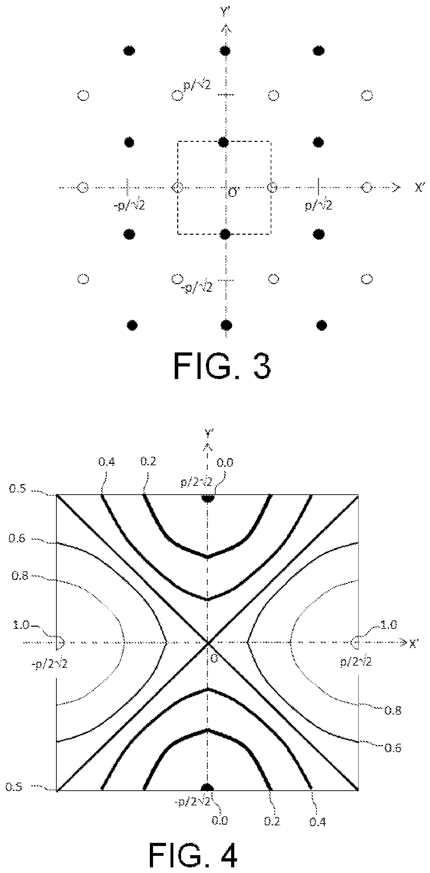

Les minima de la fonction T(x', y') sont égaux à 0 et les maxima sont égaux à 1. La figure 3 représente la répartition de ces minima et de ces maxima dans le plan O'X'Y' du filtre à gradient de densité dans le cas de périodes identiques sur les deux axes. Sur cette figure 3, les maxima sont représentés par des cercles blancs et les minima par des cercles noirs.

La figure 4 représente les courbes de transmission de même valeur dans le plan O'X'Y' limité sur les deux axes aux valeurs comprises entre -p/4√2 et +p/4√2. Les traits les plus épais correspondent aux valeurs de transmission les plus faibles.

Le filtre peut également comprendre un masque opaque comportant des ouvertures circulaires. L'emplacement de chaque ouverture correspond à celui d'une lentille de la trame matricielle et son diamètre est adapté aux dimensions de cette lentille. Plus généralement, la forme du masque correspond à celle de la pupille de la lentille.

Ce filtre peut être fabriqué au moyen de diverses technologies qui sont, notamment, la lithographie optique ou électronique, la nano-impression, l'enregistrement de plaques holographiques ou encore par des modulateurs à cristaux liquides.

La trame matricielle de mini-lentilles 12 est située dans le plan $FX_1Y_1$. Toutes les lentilles qui la composent sont identiques et de section carrée. Les dimensions des lentilles sont comprises entre quelques millimètres et quelques centimètres. Les tolérances sur la conception et la fabrication de ces lentilles doivent être telles qu'elles ne perturbent pas la surface d'onde à analyser. Cela ne présente pas de difficultés particulières pour l'homme du métier, compte-tenu de la faible ouverture de ces lentilles.

La distance focale $f_L$ des mini-lentilles est ajustée de façon que chacune d'entre elles forme une image de la pupille dans le plan O"X"Y" de la matrice de photodétecteurs.

Cette trame comporte 4k lentilles, k étant un entier supérieur ou égal à 1. La trame peut donc comporter quatre lentilles, huit lentilles, douze lentilles et ainsi de suite. Les lentilles sont organisées par groupe de quatre disposées symétriquement autour de l'axe optique. Chaque centre d'une des quatre lentilles du groupe est disposée sur un axe passant par le centre O de la pupille de sortie et un point O'M'(i, j) du filtre à gradient de densité tel que, dans le plan référencé (x', y'),

$$O'M'_{i,j} = \begin{bmatrix} i\,(m+0.25)p_x/\sqrt{2} \\ j\,(n+0.25)p_y/\sqrt{2} \end{bmatrix} \qquad (11)$$

i et j pouvant prendre les valeurs -1 et +1, m et n étant des entiers positifs ou nuls.

Les coordonnées des quatre centres $I_{i,j}$ des lentilles de chaque groupe dans le plan $FX_1Y_1$ sont déduites de la relation :

$$OI_{i,j} = \frac{f}{f+z'}OM'_{i,j} \qquad (12)$$

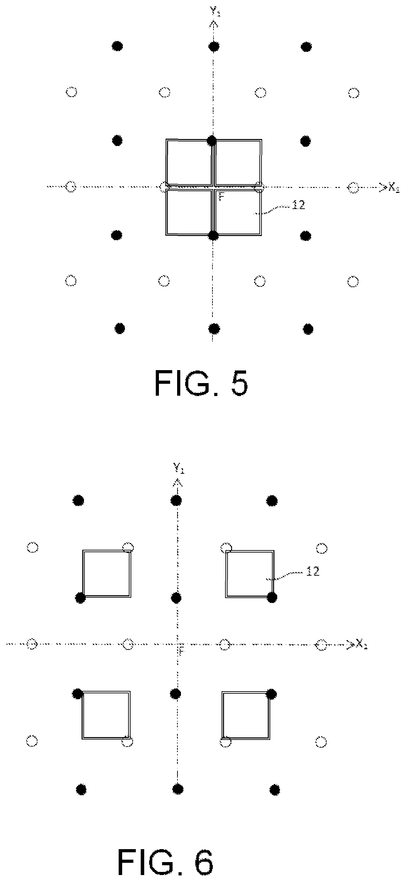

Les figures 5, 6, 7 et 8 illustrent quatre exemples de répartitions possibles desdites lentilles 12. Elles sont représentées dans le plan $FX_1Y_1$. Sur ces figures, la période p est la même sur les deux axes. Ces figures comportent également le filtre à gradient de densité.

Sur la figure 5, la trame comporte un seul groupe de quatre lentilles. Dans cet exemple, les entiers m et n sont nuls et on a :

$$O'M'_{i,j} = \begin{bmatrix} 0.25\,i\,p/\sqrt{2} \\ 0.25\,j\,p/\sqrt{2} \end{bmatrix}$$

(13)

Cette configuration est la plus simple à réaliser dans la mesure où elle comprend un minimum de lentilles et que, de plus, elles sont collées les unes aux autres.

Sur la figure 6, la trame comporte également un seul groupe de quatre lentilles. Dans cet exemple, m et ne sont égaux à 1 et on a :

$$O'M'_{i,j} = \begin{bmatrix} 1.25\,i\,p/\sqrt{2} \\ 1.25\,j\,p/\sqrt{2} \end{bmatrix}$$

(14)

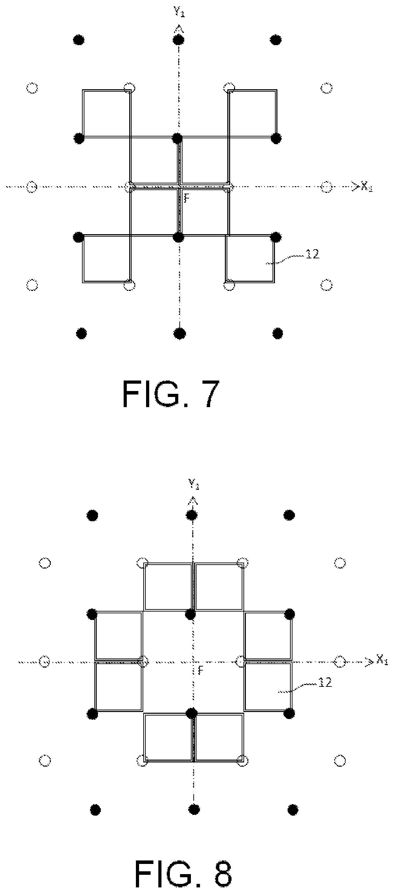

Sur la figure 7, la trame comporte les deux groupes de quatre lentilles des figures 5 et 6.

Sur la figure 8, la trame comporte deux groupes de quatre lentilles. Les centres des premier et second groupes vérifient :

$$O'M'_{i,j} = \begin{bmatrix} 0.25\,i\,p/\sqrt{2} \\ 1.25\,j\,p/\sqrt{2} \end{bmatrix} \text{ et } O'M'_{i,j} = \begin{bmatrix} 1.25\,i\,p/\sqrt{2} \\ 0.25\,j\,p/\sqrt{2} \end{bmatrix}$$

(15)

La matrice de photodétecteurs est disposée dans le plan O"X"Y" dans lequel se trouve les images de la pupille formées par les lentilles de la trame matricielle. La sensibilité de la matrice de photodétecteurs est adaptée à la bande spectrale de l'objet lumineux ou de la source lumineuse à contrôler. Cette matrice comporte un nombre de détecteurs adaptée à la résolution spatiale recherchée. A titre d'exemple, une matrice de 2048x2048 pixels est suffisante pour atteindre une résolution spatiale maximale de 1000x1000 sur la surface d'onde.

Dans ce qui précède, le dispositif optique est un objectif, son plan de focalisation est situé dans le plan de la trame matricielle des lentilles. Lorsque le dispositif optique est un afocal, la tête de mesure optique comporte une optique additionnelle disposée dans la pupille de sortie, de façon que le plan de focalisation de ladite optique additionnelle soit situé dans le plan de la trame matricielle des lentilles.

Il est également possible, quel que soit le type de dispositif optique à mesurer, d'ajouter une optique à focale variable permettant d'optimiser le contrôle en zoomant, par exemple, sur une zone particulière de la pupille.

Le calculateur de traitement d'images réalise les fonctions suivantes. Sa première fonction consiste à mémoriser les images brutes reçues par la matrice de photodétecteurs. Sa seconde fonction consiste à calibrer ces images brutes de façon à corriger les erreurs d'uniformité des pixels de la matrice de photodétecteurs. Cette calibration est obtenue à partir d'images connues enregistrées lors d'une phase de calibration préalable.

L'image ainsi calibrée est séparée en autant d'images secondaires qu'il y a de lentilles dans la trame matricielle. Chaque image secondaire est l'image de la pupille du dispositif optique donnée par une lentille particulière. Ces images secondaires sont recentrées dans le plan de la pupille. Chacune des images a une répartition d'intensité notée $I''_k(x,y)$, k étant l'indice de l'image secondaire.

Les expressions analytiques des répartitions d'intensité des images sont obtenues à partir d'une analyse en diffraction de Fresnel. On trouvera des informations sur cette méthode dans la publication de F. Hénault, « Fresnel diffraction analysis of Ronchi and reverse Hartmann tests », submitted to J. Opt. Soc. Am. A.

A titre d'exemple, pour une configuration à quatre lentilles telle que représentée sur la figure 5, ces répartitions sont les suivantes :

$$I''_1(x,y) = \frac{5}{16} - \frac{\cos\gamma}{4}\sin(\varphi'_X/\sqrt{2}) + \frac{\cos\gamma}{4}\sin(\varphi'_Y/\sqrt{2}) - \frac{1}{8}\sin(\varphi'_X/\sqrt{2})\sin(\varphi'_Y/\sqrt{2})$$
$$- \frac{1}{32}\cos(\sqrt{2}\varphi'_X) - \frac{1}{32}\cos(\sqrt{2}\varphi'_Y)$$

(16)

$$I_2''(x,y) = \frac{5}{16} + \frac{\cos\gamma}{4}\sin\left(\varphi_X'/\sqrt{2}\right) + \frac{\cos\gamma}{4}\sin\left(\varphi_Y'/\sqrt{2}\right) + \frac{1}{8}\sin\left(\varphi_X'/\sqrt{2}\right)\sin\left(\varphi_Y'/\sqrt{2}\right)$$
$$- \frac{1}{32}\cos\left(\sqrt{2}\varphi_X'\right) - \frac{1}{32}\cos\left(\sqrt{2}\varphi_Y'\right) \tag{17}$$

$$I_3''(x,y) = \frac{5}{16} - \frac{\cos\gamma}{4}\sin\left(\varphi_X'/\sqrt{2}\right) - \frac{\cos\gamma}{4}\sin\left(\varphi_Y'/\sqrt{2}\right) + \frac{1}{8}\sin\left(\varphi_X'/\sqrt{2}\right)\sin\left(\varphi_Y'/\sqrt{2}\right)$$
$$- \frac{1}{32}\cos\left(\sqrt{2}\varphi_X'\right) - \frac{1}{32}\cos\left(\sqrt{2}\varphi_Y'\right) \tag{18}$$

$$I_4''(x,y) = \frac{5}{16} + \frac{\cos\gamma}{4}\sin\left(\varphi_X'/\sqrt{2}\right) - \frac{\cos\gamma}{4}\sin\left(\varphi_Y'/\sqrt{2}\right) - \frac{1}{8}\sin\left(\varphi_X'/\sqrt{2}\right)\sin\left(\varphi_Y'/\sqrt{2}\right)$$
$$- \frac{1}{32}\cos\left(\sqrt{2}\varphi_X'\right) - \frac{1}{32}\cos\left(\sqrt{2}\varphi_Y'\right) \tag{19}$$

On a, en utilisant les notations précédentes :

$$\varphi_x' = \frac{2\pi(f+z')}{p}\frac{\partial\Delta}{\partial x}(x,y) + \frac{2\pi z'}{fp}x, \ \varphi_y' = \frac{2\pi(f+z')}{p}\frac{\partial\Delta}{\partial y}(x,y) + \frac{2\pi z'}{fp}y \tag{20}$$

et

$$\gamma = 4\pi\lambda\frac{z'(f+z')}{f\,p^2} \tag{21}$$

$\frac{\partial\Delta}{\partial x}(x,y)$ et $\frac{\partial\Delta}{\partial y}(x,y)$ représentent les dérivées de la surface d'onde en chaque point P de la pupille.

Le paramètre adimensionnel y prend typiquement une valeur très petite (généralement de l'ordre de $10^{-4}$).

A partir des images secondaires, il est alors possible de calculer ces deux dérivées de la surface d'onde. On obtient :

$$\frac{\partial\Delta}{\partial x}(x,y) = \frac{z'}{f(f+z')}x$$
$$+ \frac{p}{2\pi\sqrt{2}(f+z')}\sin^{-1}\left(\frac{I_4''(x,y) - I_3''(x,y) + I_2''(x,y) - I_1''(x,y)}{\cos\gamma}\right) \tag{22}$$

et

$$\frac{\partial \Delta}{\partial y}(x,y) = \frac{z'}{f(f+z')}y$$
$$+ \frac{p}{2\pi\sqrt{2}(f+z')} \sin^{-1}\left(\frac{I_4''(x,y) + I_3''(x,y) - I_2''(x,y) - I_1''(x,y)}{\cos \gamma}\right)$$

$$(23)$$

Enfin, il est possible de reconstruire la surface d'onde Δ(x, y) à partir de ces deux dérivées partielles à partir de leur intégration. On trouvera des informations complémentaires sur ce point dans la publication de F. Roddier, C. Roddier, « Wavefront reconstruction using iterative Fourier transforms, » Applied Optics vol. 30, p 1325-1327 (1991).

L'optimisation de la période spatiale du filtre à gradient de densité doit satisfaire à deux contraintes antagonistes.

Les équations donnant les variations de phase φ'x et φ'y montrent que les grandeurs à mesurer $\frac{\partial \Delta}{\partial x}(x,y)$ et

$\frac{\partial \Delta}{\partial y}(x,y)$ sont amplifiées par un facteur g que l'on appelle gain et qui vaut : $g = 2\pi\sqrt{2}(f+z')/p$ .

Le choix d'un gain élevé permet de maximiser les variations d'intensité dans les images acquises. Le respect de ce critère de sensibilité conduit à favoriser les courtes périodes spatiales de façon à minimiser le paramètre p.

Par ailleurs, l'utilisation d'un filtre construit à partir de fonctions périodiques entraîne un effet de réplications de l'image de la pupille du dispositif optique à mesurer. Cet effet a pour conséquence le décentrement relatif ρ des images secondaires. On démontre que ce paramètre vaut : $\rho = \frac{\lambda(f+z')}{Dp}$ , D étant le diamètre de la pupille.

Ce paramètre doit être aussi faible que possible, typiquement inférieur à 1%, ce qui conduit à favoriser les longues périodes spatiales.

Il est possible d'établir un compromis entre ces deux tendances antagonistes au moyen d'un critère C des moindres carrés qui vaut :

$$C = \rho^2 + \frac{w^2}{g^2} = \frac{\lambda^2(f+z')^2}{D^2p^2} + \frac{w^2p^2}{4\pi^2(f+z')^2}$$

$$(24)$$

Où w est un facteur d'échelle compris entre $10^3$ et $10^4$. Le minimum du critère est atteint lorsque la période $p_0$ vaut :

$$p_0 = (f+z')\sqrt{\frac{2\pi\lambda}{wD}}$$

$$(25)$$

Cette période $p_0$ peut être affinée au moyen de simulations.

A titre d'exemple, pour un télescope de 100 mètres de focale, de 10 mètre d'ouverture et utilisé dans le visible à une longueur d'onde centrée sur 0.5 micron, la tête optique étant disposée au foyer de ce télescope, la période spatiale du filtre est de 1 millimètre.

La précision de mesure obtenue est de l'ordre du centième de longueur d'onde et le temps de mesure est inférieur à un centième de seconde. Ce temps est suffisamment court pour s'affranchir des perturbations générées par l'environnement telles que les micro-vibrations et les turbulences atmosphériques.

Selon l'invention, le filtre à gradient de densité présente une transmission optique T(x', y') qui varie de manière linéaire par morceaux, régie par l'équation

$$T_{ij}(x',y') = \frac{1 + \sqrt{2}\pi(i\,dx'/p_x - j\,dy'/p_x)}{2} \tag{26}$$

avec

$$\begin{bmatrix} dx' \\ dy' \end{bmatrix} = \begin{bmatrix} x' - i(m+0.25)p_x/\sqrt{2} \\ y' - j(n+0.25)p_y/\sqrt{2} \end{bmatrix} \tag{27}$$

L'équation (26), (27) est obtenue par développement limité au premier ordre des fonctions sinus de l'équation (1) au voisinage des points M'$_{ij}$ définis par (2).

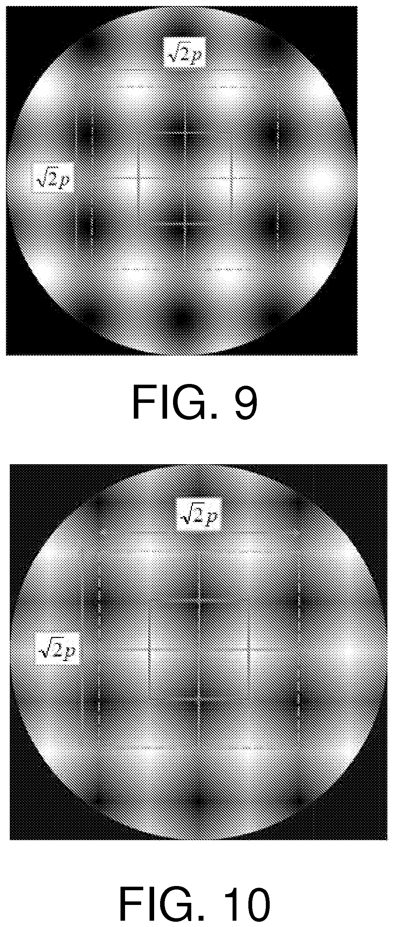

Les figures 9 et 10 montrent, respectivement, la carte en transmission d'un filtre défini par l'équation (1) - dit « à sinus croisés » et par les équations (26), (27) - dit « linéaire » - dans le cas où $p_x = p_y = p$.

Le principal avantage du mode de réalisation selon l'invention est que les calculs nécessaires pour obtenir les dérivées partielles à partir des images issues de ladite tête de mesure optique sont plus simples que dans le cas du filtre à sinus croisés. Il est en effet possible de démontrer qu'on a alors :

$$\frac{\partial \Delta}{\partial x}(x,y) = Ax + B\left(I_4''(x,y) - I_3''(x,y) + I_2''(x,y) - I_1''(x,y)\right) \tag{28}$$

$$\frac{\partial \Delta}{\partial y}(x,y) = Ay + B\left(I_4''(x,y) + I_3''(x,y) - I_2''(x,y) - I_1''(x,y)\right) \tag{29}$$

A et B étant des constantes dépendant des paramètres géométriques de la tête de mesure optique.

Pour une configuration à quatre lentilles telle que représentée sur la figure 5, mais avec un filtre défini par les équations (26), (27) on a en particulier :

$$\frac{\partial \Delta}{\partial x}(x,y) = \frac{z'}{f(f+z')}x - \frac{p}{4\sqrt{2}(f+z')}\left(I_4''(x,y) - I_3''(x,y) + I_2''(x,y) - I_1''(x,y)\right) \tag{30}$$

$$\frac{\partial \Delta}{\partial y}(x,y) = \frac{z'}{f(f+z')}y - \frac{p}{4\sqrt{2}(f+z')}\left(I_4''(x,y) + I_3''(x,y) - I_2''(x,y) - I_1''(x,y)\right) \tag{31}$$

Où f et *z'* ont été définis en référence au filtre à sinus croisés.

Des simulations numériques effectuées avec les mêmes codes de calcul que dans le cas du filtre « à sinus croisés » de l'équation (1) ont montré que le système de contrôle de surfaces d'onde optique équipé du filtre « linéaire » des équations (26) et (27) permet d'atteindre des précisions de mesure équivalentes.

## Revendications

1. Système de contrôle d'une surface d'onde optique issue d'un dispositif optique (1), ledit dispositif optique comportant une pupille de sortie (3), ledit système de contrôle comportant une tête de mesure optique (10) et un calculateur (20) de traitement des images issues de ladite tête de mesure optique, dans lequel

   - la tête de mesure optique comporte :

      ◦ un filtre (11) à gradient de densité, dans un plan référencé (x', y') perpendiculaire à l'axe optique de la tête de mesure optique, la transmission T(x', y') dudit filtre étant régie par l'équation :

$$T_{ij}(x',y') = \frac{1 + \sqrt{2}\pi(i\,dx'/p_x - j\,dy'/p_x)}{2}$$

avec

$$\begin{bmatrix} dx' \\ dy' \end{bmatrix} = \begin{bmatrix} x' - i\,(m + 0.25)\,p_x \big/ \sqrt{2} \\ y' - j\,(n + 0.25)\,p_y \big/ \sqrt{2} \end{bmatrix}$$

$p_x$ et $p_y$ représentant les périodes associées à deux fonctions sinusoïdales dépendant respectivement de dx' et de dy'), i et j pouvant prendre les valeurs -1 et +1, m et n étant des entiers positifs ou nuls,
∘ une trame matricielle de lentilles (12) identiques, de forme carrée, de même focale, ladite trame matricielle comportant au moins quatre lentilles, chaque centre d'une des quatre lentilles étant disposé sur un axe passant par le centre de la pupille de sortie et un point O'M'(i, j) du filtre à gradient de densité tel que, dans le plan référencé (x', y'),

$$O'M'_{i,j} = \begin{bmatrix} i\,(m + 0.25)\,p_x/\sqrt{2} \\ j\,(n + 0.25)\,p_y/\sqrt{2} \end{bmatrix}$$

une matrice (13) de photodétecteurs, chacune des quatre lentilles formant de la pupille une image dans le plan de cette matrice, ces images étant référencées $I''_k(x, y)$, k variant de 1 à 4 ;

- le calculateur (20) de traitement des images comporte des moyens de calcul permettant de calculer les dérivées partielles $\frac{\partial \Delta}{\partial x}(x, y)$ et $\frac{\partial \Delta}{\partial y}(x, y)$ de la surface d'onde $\Delta(x, y)$ dans le plan (x, y) de la pupille de sortie, ces dérivées partielles étant égales à

$$\frac{\partial \Delta}{\partial x}(x, y) = Ax + B\big(I''_4(x, y) - I''_3(x, y) + I''_2(x, y) - I''_1(x, y)\big)$$

$$\frac{\partial \Delta}{\partial y}(x, y) = Ay + B\big(I''_4(x, y) + I''_3(x, y) - I''_2(x, y) - I''_1(x, y)\big)$$

A et B étant des constantes dépendant des paramètres géométriques de la tête de mesure optique.

2. Système de contrôle selon la revendication 1 dans lequel, lorsque le dispositif optique est un objectif, son plan de focalisation étant situé dans le plan de la trame matricielle des lentilles.

3. Système de contrôle selon la revendication 1 dans lequel, lorsque le dispositif optique est un afocal, la tête de mesure optique comporte une optique additionnelle disposée dans la pupille de sortie, de façon que le plan de focalisation de ladite optique additionnelle est situé dans le plan de la trame matricielle des lentilles.

4. Système de contrôle selon l'une des revendications précédentes dans lequel la trame matricielle comporte au moins un second quadruplet de lentilles.

5. Système de contrôle selon l'une des revendications précédentes, dans lequel les deux périodes $p_x$ et $p_y$ sont égales.

**Patentansprüche**

1. System zur Kontrolle einer Wellenfront einer optischen Welle, die von einer optischen Vorrichtung (1) ausgeht, wobei die optische Vorrichtung eine Austrittspupille (3) aufweist, wobei das Kontrollsystem einen optischen Messkopf (10) und einen Rechner (20) zur Verarbeitung der vom optischen Messkopf ausgehenden Bilder aufweist, wobei

- der optische Messkopf Folgendes aufweist:

∘ einen Gradientendichtefilter (11) in einer Bezugsebene (x', y'), die senkrecht zur optischen Achse des optischen Messkopfes steht, wobei für die Transmission T(x', y') des Filters die folgende Gleichung gilt:

$$T_{ij}(x',y') = \frac{1 + \sqrt{2}\pi\left(i\,dx'/p_x - j\,dy'/p_x\right)}{2}$$

$$\text{mit } \begin{bmatrix} dx' \\ dy' \end{bmatrix} = \begin{bmatrix} x' - i\left(m+0{,}25\right)p_x\big/\sqrt{2} \\ y' - j\left(n+0{,}25\right)p_y\big/\sqrt{2} \end{bmatrix}$$

wobei $p_x$ und $p_y$ für die zu zwei Sinusfunktionen gehörenden Perioden stehen,
die jeweils abhängig von dx' bzw. dy' sind, wobei i und j die Werte -1 und +1 annehmen können, m und n positive oder ganze Zahlen oder Null sind,

∘ ein Matrixraster identischer, quadratischer Linsen (12) mit gleicher Brennweite, wobei das Matrixraster mindestens vier Linsen aufweist, wobei jeder Mittelpunkt einer der vier Linsen auf einer Achse angeordnet ist, die durch den Mittelpunkt der Austrittspupille und einen Punkt O'M'(i, j) des Gradientendichtefilters verläuft, so dass in der Bezugsebene (x', y') gilt

$$O'M'_{i,j} = \begin{bmatrix} i\left(m+0{,}25\right)p_x/\sqrt{2} \\ j\left(n+0{,}25\right)p_y/\sqrt{2} \end{bmatrix}$$

∘ eine Matrix (13) von Photodetektoren, wobei jede der vier Linsen in der Ebene dieser Matrix von der Pupille ein Bild bildet, wobei diese Bilder mit I''$_k$(x, y) bezeichnet sind, wobei k von 1 bis 4 variiert;

- der Bildverarbeitungsrechner (20) Rechenmittel zum Berechnen der partiellen Ableitungen $\frac{\partial \Delta}{\partial x}(x,y)$ und $\frac{\partial \Delta}{\partial y}(x,y)$ der Wellenfront $\Delta$(x, y) in der Ebene (x, y) der Austrittspupille umfasst, wobei für diese partiellen Ableitungen Folgendes gilt:

$$\frac{\partial \Delta}{\partial x}(x,y) = Ax + B\left(I''_4(x,y) - I''_3(x,y) + I''_2(x,y) - I''_1(x,y)\right)$$

$$\frac{\partial \Delta}{\partial y}(x,y) = Ay + B\left(I''_4(x,y) + I''_3(x,y) - I''_2(x,y) - I''_1(x,y)\right)$$

,

wobei A und B Konstanten sind, die von den geometrischen Parametern des optischen Messkopfes abhängen.

2. Kontrollsystem nach Anspruch 1, wobei, wenn die optische Vorrichtung ein Objektiv ist, dessen Brennebene in der Ebene des Matrixrasters der Linsen liegt.

3. Kontrollsystem nach Anspruch 1, wobei, wenn die optische Vorrichtung eine afokale Vorrichtung ist, der optische Messkopf eine zusätzliche Optik aufweist, die in der Austrittspupille derart angeordnet ist, dass die Brennebene der zusätzlichen Optik in der Ebene des Matrixrasters der Linsen liegt.

4. Kontrollsystem nach einem der vorstehenden Ansprüche, wobei das Matrixraster mindestens ein zweites Linsenquadruplet aufweist.

5. Kontrollsystem nach einem der vorstehenden Ansprüche, wobei die beiden Perioden $p_x$ und $p_y$ gleich sind.

**Claims**

1. System for inspecting an optical wave surface from an optical device (1), the optical device comprising an exit pupil (3), the monitoring system comprising an optical measuring head (10) and a computer (20) for processing images from the optical measuring head, wherein

   - the optical measuring head comprises:

     ○ a gradient density filter (11), in a plane referenced (x', y') perpendicular to the optical axis of the optical measuring head, the transmission T(x', y') of the filter being governed by the equation:

     $$T_{ij}(x', y') = \frac{1 + \sqrt{2}\pi\left(i\, dx'/p_x - j\, dy'/p_x\right)}{2}$$

     where

     $$\begin{bmatrix} dx' \\ dy' \end{bmatrix} = \begin{bmatrix} x' - i(m + 0.25)p_x/\sqrt{2} \\ y' - j(n + 0.25)p_y/\sqrt{2} \end{bmatrix}$$

     $p_x$ and $p_y$ representing the periods associated with two sinusoidal functions
     dependent respectively on dx' and dy'), i and j being able to take the values -1 and +1, and m and n being positive integers or nil,

     ○ a matrix array of identical, square-shaped lenses (12) of the same focal length, the matrix array comprising at least four lenses, each center of one of the four lenses being arranged on an axis passing through the center of the exit pupil and a point O'M'(i, j) of the gradient density filter such that, in the plane referenced (x', y'),

     $$O'M'_{i,j} = \begin{bmatrix} i(m + 0.25)p_x/\sqrt{2} \\ j(n + 0.25)p_y/\sqrt{2} \end{bmatrix}$$

     ○ an array (13) of photodetectors, each of the four lenses forming an image of the pupil in the plane of this array, these images being referenced I''$_k$(x, y), k varying from 1 to 4;

     - the computer (20) for processing the images comprises calculation means for calculating the partial derivatives $\frac{\partial \Delta}{\partial x}(x, y)$ and $\frac{\partial \Delta}{\partial y}(x, y)$ of the wave surface $\Delta(x, y)$ in the plane (x, y) of the exit pupil, these partial derivatives being equal to

     $$\frac{\partial \Delta}{\partial x}(x, y) = Ax + B\left(I''_4(x, y) - I''_3(x, y) + I''_2(x, y) - I''_1(x, y)\right)$$

     $$\frac{\partial \Delta}{\partial y}(x, y) = Ay + B\left(I''_4(x, y) + I''_3(x, y) - I''_2(x, y) - I''_1(x, y)\right)$$

     A and B being constants dependent on the geometric parameters of the optical measuring head.

2. Inspection system according to claim 1 wherein, when the optical device is a lens, its focusing plane is located in the plane of the matrix array of the lenses.

3. Inspection system according to claim 1 wherein, when the optical device is an afocal, the optical measuring head comprises an additional optic arranged in the exit pupil, such that the focusing plane of said additional optic is located in the plane of the matrix array of the lenses.

4. Inspection system according to any of the preceding claims, wherein the matrix array comprises at least one second quadruplet of lenses.

5. Inspection system according to any of the preceding claims, wherein the two periods $p_x$ and $p_y$ are equal.

FIG. 1

FIG. 2

FIG. 3

FIG. 4

FIG. 5

FIG. 6

FIG. 7

FIG. 8

# FIG. 9

# FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. MALACARA**. Optical Shop Testing. Willey, 2007
- **J.W. HARDY** ; **J.E. LEFEBVRE** ; **C.L. KOLIOU-POULOS**. Real-time atmospheric compensation. *J. Opt. Soc. Am.*, 1977, vol. 67, 360-369
- **R. V. SHACK** ; **B.C. PLATT**. Production and use of a lenticular Hartmann screen. *J. Opt. Soc. Am.*, 1971, vol. 61, 656
- **J. PRIMOT** ; **N. GUÉRINEAU**. Extended Hartmann test based on the pseudoguiding property of a Hartmann mask completed by a phase chessboard. *Applied Optics*, 2000, vol. 39, 5715-5720

- **J. LANG** ; **B. GRIMM** ; **S. GOELZ** ; **J. F. BILLE**. Objective measurement of wave aberrations of the humane eye with the use of a Hartmann-Shack wavefront sensor. *J. Opt. Soc. Am. A*, 1994, vol. 11, 1949-2685
- **HÉNAULT et al.** Crossed-sine wavefront sensor for adaptive optics, metrology and ophthalmology applications. *ENGINEERING RESEARCH EXPRESS*, 04 March 2020, vol. 2 (015042), 1-14
- **F. HÉNAULT**. Fresnel diffraction analysis of Ronchi and reverse Hartmann tests. *J. Opt. Soc. Am. A.*
- **F. RODDIER** ; **C. RODDIER**. Wavefront reconstruction using iterative Fourier transforms. *Applied Optics*, 1991, vol. 30, 1325-1327